(19) Europäisches Patentamt

European Patent Office

Office européen des brevets

(11) **EP 0 995 317 B1**

(12) **EUROPÄISCHE PATENTSCHRIFT**

(45) Veröffentlichungstag und Bekanntmachung des Hinweises auf die Patenterteilung:
**23.01.2002 Patentblatt 2002/04**

(21) Anmeldenummer: **98946236.1**

(22) Anmeldetag: **11.07.1998**

(51) Int Cl.[7]: **H04N 7/36**

(86) Internationale Anmeldenummer:
**PCT/DE98/01938**

(87) Internationale Veröffentlichungsnummer:
**WO 99/04574 (28.01.1999 Gazette 1999/04)**

(54) **INTERPOLATIONSFILTERUNGSVERFAHREN FÜR SUB-PELGENAUIGKEIT-BEWEGUNGSSCHÄTZUNG**

INTERPOLATION FILTERING METHOD FOR ACCURATE SUB-PIXEL MOTION ASSESSMENT

PROCEDE DE FILTRAGE D'INTERPOLATION POUR EVALUATION CINEMATIQUE AVEC RESOLUTION SOUS-PIXEL

(84) Benannte Vertragsstaaten:
**CH DE DK ES FI FR GB IT LI NL SE**

(30) Priorität: **15.07.1997 DE 19730305**

(43) Veröffentlichungstag der Anmeldung:
**26.04.2000 Patentblatt 2000/17**

(73) Patentinhaber: **ROBERT BOSCH GMBH**
**70442 Stuttgart (DE)**

(72) Erfinder:
• **BENZLER, Ulrich**
**D-30855 Langenhagen (DE)**
• **WERNER, Oliver**
**South Croydon, Surrey CR2 7EA (GB)**

(56) Entgegenhaltungen:
**EP-A- 0 348 207        EP-A- 0 558 922**

• ZIEGLER M: "HIERARCHICAL MOTION ESTIMATION USING THE PHASE CORRELATION METHOD IN 140 MBIT/S HDTV-CODING" SIGNAL PROCESSING OF HDTV, 2, TURIN, AUG. 30 - SEPT. 1, 1989, Nr. WORKSHOP 3, 30. August 1989, Seiten 131-137, XP000215234 CHIARIGLIONE L
• WERNER O: "DRIFT ANALYSIS AND DRIFT REDUCTION FOR MULTIRESOLUTION HYBRID VIDEO CODING" SIGNAL PROCESSING. IMAGE COMMUNICATION, Bd. 8, Nr. 5, 1. Juli 1996, Seiten 387-409, XP000590242
• SIU-LEONG IU: "COMPARISION OF MOTION COMPENSATION USING DIFFERENT DEGREES OF SUB- PIXEL ACCURACY FOR INTERFIELD/INTERFRAME HYBRID CODING OF HDTV IMAGE SEQUENCES" MULTIDIMENSIONAL SIGNAL PROCESSING, SAN FRANCISCO, MAR. 23 - 26, 1992, Bd. 3, Nr. CONF. 17, 23. März 1992, Seiten 465-468, XP000378969 INSTITUTE OF ELECTRICAL AND ELECTRONICS ENGINEERS
• "MUNICH MEETING OF MPEG-4 WORKING GROUP. REPORT ISO/IEC JTC1/SC29/WG11 MPEG4/N1172" INTERNATIONAL ORGANISATION FOR STANDARDISATION - ORGANISATION INTERNATIONALE DE NORMALISATION, Januar 1996, Seiten 3-49, XP002047798

**Beschreibung**

Stand der Technik

Die Erfindung geht aus von einem Verfahren zur Erzeugung eines verbesserten Bildsignals bei der Bewegungsschätzung von Bildsequenzen, insbesondere eines Prädiktionssignals für Bewegtbilder mit bewegungskompensierender Prädiktion, wobei für Bildblöcke Bewegungsvektoren gebildet werden, die für jeden Bildblock eines aktuellen Bildes die Position des zur Prädiktion benutzten Bildblockes gegenüber einem zeitlich davorliegenden Referenzbild angeben.

Aus der EP 0 558 922 B2 ist ein Verfahren zur Verbesserung der Bewegungsschätzung in Bildsequenzen in Halbpelgenauigkeit nach dem Full-Search-Verfahren bekannt. Dort wird in einem ersten Verfahrensschritt der Suchbereich und in einem zweiten Verfahrensschritt der Match-Block gefiltert unter Zuhilfenahme eines zusätzlichen digitalen Filters, daß eine Rasterverschiebung des Bildpunktrasters um ⏌ pel ermöglicht. Mit dieser Maßnahme ist eine Verfälschung des Bewegungsvektorfeldes auszuschließen.

Beim "MPEG-4 Video Verification Model Version 7.0", Bristol, April 1997, MPEG 97/N1642 in ISO/IEC JTC1/SC 29/WG11 ist ein Encoder und Decoder zur objektbasierten Codierung von Bewegtbildfolgen spezifiziert. Dabei werden nicht mehr rechteckige Bilder fester Größe codiert und zum Empfänger übertragen, sondern sogenannte VIDEO OBJECTS (VO), welche beliebige Form und Größe aufweisen dürfen. Die Abbildung eines solchen VO in der Kamerabildebene zu einem bestimmten Zeitpunkt wird als VIDEO OBJECTS PLANE (VOP) bezeichnet. Somit ist die Beziehung zwischen VO und VOP äquivalent zu der Beziehung zwischen Bildfolge und Bild im Falle der Übertragung rechteckiger Bilder fester Größe.

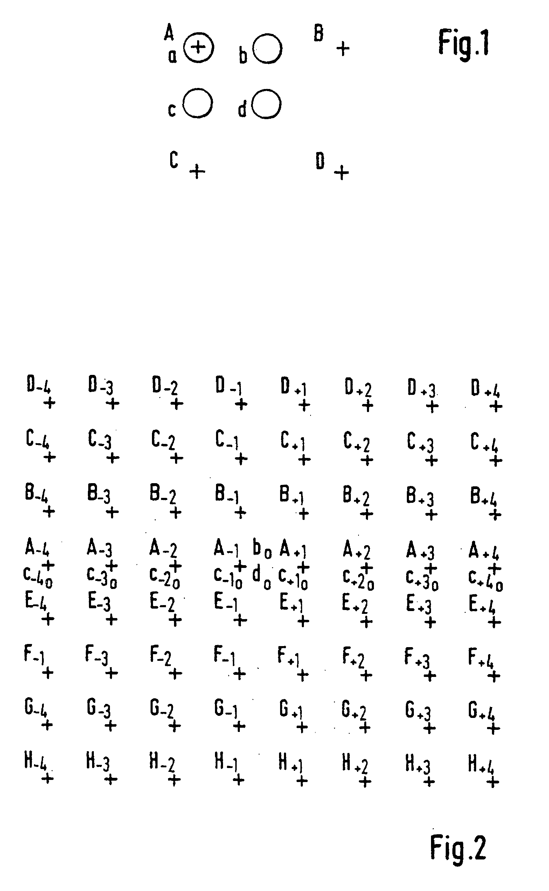

Die bewegungskompensierende Prädiktion im Verifikationsmodell wird mit Hilfe sogenannter blockweiser Bewegungsvektoren durchgeführt, die für jeden Block der Größe 8 x 8 bzw. 16 x 16 Bildpunkte des aktuellen Bildes die Position des zur Prädiktion benutzten Blockes in einem bereits übertragenen Referenzbild angeben. Die Auflösung der Bewegungsvektoren ist dabei auf einen halben Bildpunkt beschränkt, wobei Bildpunkte zwischen dem Abtastraster (half pixel position) durch eine bilineare Interpolationsfilterung aus den Bildpunkten auf dem Abtastraster (integer pixel position) erzeugt werden (Figur 1).+ gibt hierbei die Ganzzahl-Pixel-Position und O die Halb-Pixel-Position an. Die interpolierten Werte a, b, c und d in Halb-Pixel-Position ergeben sich durch folgende Beziehungen:
a = A, b = (A + B)//2, c = (A + C)//2,
d = (A + B + C + D)//4, wobei // eine gerundete Ganzzahl-Division kennzeichnet.

Aus Ziegler M: 'HIERACHICAL MOTION ESTIMATION USING THE PHASE CORRELATION METHOD IN 140 MBIT/S HDTV-CODING', SIGNAL PROCESSING OF HDTV, 2, TURIN, AUG. 30 - SEPT. 1, 1989, Nr. WORKSHOP 3, 30. August 1989, Seiten 131 - 137, CHIARIGLIONE L ist ein Mehrschrittverfahren für die Bestimmung von Bewegungsvektoren bekannt, bei dem Blockmatching und bilineare Interpolation angewendet wird. Aus Pang K. K et al: 'OPTIMUM LOOP FILTER IN HYBRID CODERS', IEEE TRANSACTIONS ON CIRCUITS AND SYSTEMS FOR VIDEO TECHNOLOGY, Bd. 4, Nr. 2, 1. April 1994, Seiten 158 - 167 ist es bekannt für eine Interpolationsfilterung im Ortsbereich nicht nur die direkt benachbarten Bildpunkte zu verwenden, sondern insgesamt acht in der Umgebung liegende Bildpunkte.

Vorteile der Erfindung

Mit den Maßnahmen der Erfindung läßt sich die Qualität des Prädiktionssignals und somit die Kodierungseffizienz verbessern. Dabei wird zur Erzeugung von Bildpunkten zwischen dem Bildpunkt-Abtastraster eine größere örtliche Nachbarschaft berücksichtigt, als bei der bilinearen Interpolation. Die erfindungsgemäße aliasing-reduzierende Interpolationsfilterung führt zu einer erhöhten Auflösung des Bewegungsvektors und damit zu einem Prädiktionsgewinn und einer erhöhten Codierungseffizienz. Bei der Erfindung können die FIR-Filterkoeffizienten den zu codierenden Signalen angepaßt und für jedes Video-Object getrennt übertragen werden, was eine weitere Effizienzerhöhung für die Codierung ermöglicht sowie die Flexibilität des Verfahrens erhöht.

Im Gegensatz zur Lösung gemäß der EP 0 558 922 B1 müssen keine zusätzlichen Polyphasenfilterstrukturen für Zwischenpositionen mit ⏌ pel-Bildpunktauflösung in horizontaler und vertikaler Richtung entworfen werden.

Mit den Maßnahmen der Erfindung ist es möglich, daß bei gleichbleibender Datenrate die Bildfolgefrequenz eines MPEG-1-Coders von 25 Hz auf 50 Hz verdoppelt werden kann. Bei einem MPEG2-Coder kann die Datenrate bei gleichbleibender Bildqualität um bis zu 30% reduziert werden.

Ein Verfahren gemäß der Erfindung ist im Anspruch 1 definiert.

Zeichnungen

Anhand von Zeichnungen werden nun Ausführungsbeispiele der Erfindung näher erläutert. Es zeigen:

Figur 2 ein Interpolationsschema für Bildpunkte zwischen dem Bildpunkt-Abtastraster,
Figur 3 die Struktur eines FIR-Filters zur Interpolation,
Figur 4 eine weitere Interpolation mit noch höherer Auflösung.

Beschreibung von Ausführungsbeispielen

Beim Verfahren nach der Erfindung werden für Bildblöcke Bewegungsvektoren gebildet, die für jeden Bildblock eines aktuellen Bildes die Position des zur Prädiktion benutzten Bildblockes gegenüber einem zeitlich davorliegenden Referenzbild angeben.

Die Bestimmung der Bewegungsvektoren für die Prädiktion erfolgt in drei aufeinanderfolgenden Schritten: In einem ersten Suchschritt wird ein Bewegungsvektor mit Pelgenauigkeit nach einem herkömmlichen Verfahren, z. B. nach der Full-Search-Block-Matching-Methode, für jeden Bildblock bestimmt. Hierbei wird das Minimum des Fehlerkriteriums für mögliche Bewegungspositionen ermittelt und jener Vektor, der die Bewegung des Bildblockes am besten beschreibt, ausgewählt (EP 0 368 151 B1).

In einem zweiten Suchschritt, der wiederum auf einer solchen Minimumsuche für das Fehlerkriterium basiert, wird ausgehend von dem im ersten Schritt ermittelten Bewegungsvektor mit Pelgenauigkeit durch eine aliasing-reduzierende Interpolationsfilterung mittels eines digitalen symmetrischen FIR (finite impulse response)-Filters ein verbesserter Bewegungsvektor auf Subpelgenauigkeit ermittelt. Die Auflösung wird hierbei höher gewählt als im ersten Suchschritt, vorzugsweise wird eine Auflösung von einem halben Bildpunkt bezogen auf das Bildpunktraster gewählt. Figur 2 zeigt das Interpolationsmuster für die Bildpunkte b, c und d zwischen dem Bildpunktraster, die sich aus den Nachbarbildpunkten A, B, C, D, E, F, G, H auf dem Bildpunktraster ergeben. + gibt die Ganzzahl-Pixelposition an, o die Halbpixelposition. Es gilt:

$$b = (CO1x(A_{-1} + A_{+1}) + CO2x (A_{-2} + A_{+2}) + CO3x (A_{-3} + A_{+3}) + CO4x (A_{-4} + A_{+4}))/256$$

$$c_i = (CO1x(A_i + E_i) + CO2x(B_i + F_i) + CO3x (C_i + G_i) + GO4x(D_i + H_i))/256$$

$$d = (CO1x(c_{-1} + c_{+1}) + CO2x(c_{-2} + c_{+2}) + CO3x (c_{-3} + C_{+3}) + CO4x(c_{-4} + c_{+4}))/256$$

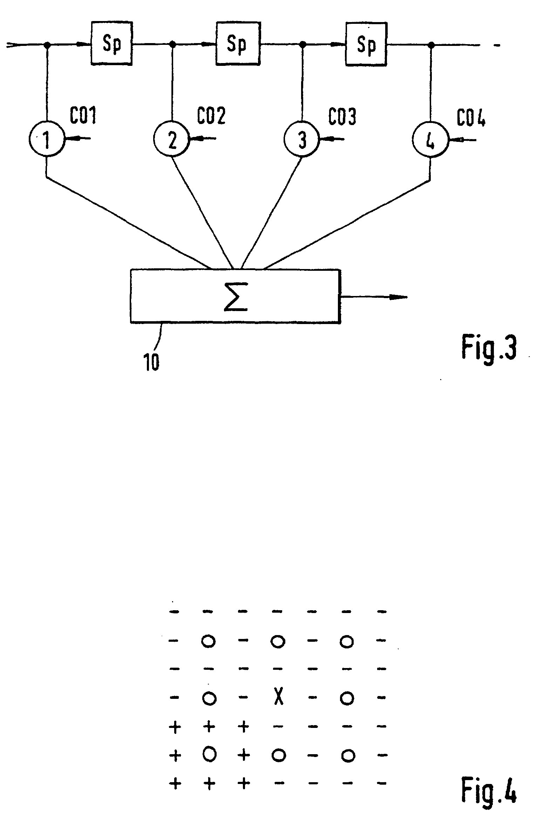

Die Struktur des verwendeten FIR-Interpolationsfilters ist aus Figur 3 ersichtlich. Es weist nach jeder Bildpunktposition $\delta p$ einen Abzweig zu einem Koeffizientenbewerter 1, 2, 3 usw. auf und eine Summationseinrichtung 10 am Ausgang. Wie aus obigen Beziehungen ersichtlich ist, wird zur Erzeugung von Bildpunkten zwischen dem Abtastraster eine größere örtliche Nachbarschaft berücksichtigt, als bei der bilinearen Interpolation nach dem Stand der Technik. Die Interpolationsfilterkoeffizienten CO2, CO3, CO4 werden dabei so bestimmt, daß die Interpolationsfehlerleistung minimal wird. Die Koeffizienten können direkt mit dem bekannten Schätzverfahren des kleinsten, mittleren quadratischen Fehlers bestimmt werden. Aus der Minimierung der Interpolationsfehlerleistung erhält man ein lineares Gleichungssystem, dessen Koeffizienten aus dem Orthogonalitätsprinzip abgeleitet werden können. Ein derart optimierter Satz von FIR-Filterkoeffizienten ist durch die Koeffizienten CO1 = 161/256, CO2 = -43/256, CO3 = 23/256, CO4 = -8/256 gegeben.

Im dritten Suchschritt wird ausgehend von dem auf % Pelgenauigkeit bestimmten Bewegungsvektor durch eine weitere Interpolationsfilterung eine lokale Suche unter Zugrundelegung der acht Nachbarbildpunkte mit einer Auflösung, die noch weiter erhöht ist, vorzugsweise auf ¼ Bildpunkt, durchgeführt. Es wird wie zuvor der Bewegungsvektor ausgewählt, der die geringste Prädiktionsfehlerleistung liefert.

Das Interpolationsmuster hierzu zeigt Figur 4. Die ganzzahligen Bildpunkt-Positionen sind mit X gekennzeichnet, die Halb-Pixel-Bildpunktpositionen mit o und die Viertel-Pixel-Bildpunktpositionen mit -. O markiert die beste Kompensation mit 1/2-Bildpunkt und + die Viertelbildpunkt-Suchposition.

Interpoliert wird bezüglich des Bildpunktrasters mit der Auflösung von einem halben Bildpunkt aus dem zweiten Suchschritt mit den FIR-Filterkoeffizienten CO1' = 1/2, CO2' = O, CO3' = O, CO4' = O.

Die gleiche zuvor vorgestellte Interpolationstechnik wird für die bewegungskompensierende Prädiktion verwendet.

Falls die Verarbeitung innerhalb eines Coders mit einem reduzierten Bildformat durchgeführt wird (SIF-Format innerhalb eines MPEG1-Coders oder Q-CIF in einem H.263-Coder), zur Anzeige aber das ursprüngliche Eingangsformat verwendet wird, z.B. CCIR 601[1] bei MPEG-1 oder CIF bei H.263, muß als Nachverarbeitung eine örtliche Interpolationsfilterung durchgeführt werden. Auch für diesen Zweck kann die beschriebene aliasing-kompensierende-Interpolationsfilterung verwendet werden.

**EP 0 995 317 B1**

Um die aliasing-kompensierende Interpolation mit 1/4 Pel Auflösung zu aktivieren, können in einen Bildübertragungs-Bitstrom Aktivierungsbits eingefügt werden.

Für die Prädiktion von Video-Objekten können die Filterkoeffizienten CO1 bis CO4 und CO1' bis CO4' für jedes der Video-Objekte VO getrennt aufbereitet werden und in den Bildübertragungs-Bitstrom zu Beginn der Übertragung des jeweiligen Video-Objekts eingefügt werden.

Zur Codierung eines Bewegungsvektors kann der Wertebereich der zu codierenden Bewegungsvektor-Differenzen an die erhöhte Auflösung angepaßt werden.

**Patentansprüche**

1. Verfahren zur Erzeugung eines verbesserten Bildsignals bei der Bewegungsschätzung von Bildsequenzen, insbesondere eines Prädiktionssignals für Bewegtbilder mit bewegungskompensierender Prädiktion, wobei für Bildblöcke Bewegungsvektoren gebildet werden, die für jeden Bildblock eines aktuellen Bildes die Position des zur Prädiktion benutzten Bildblockes gegenüber einem zeitlich davorliegenden Referenzbild angeben, mit folgenden Schritten:

   - In einem ersten Suchschritt wird ein Bewegungsvektor auf Pelgenauigkeit bestimmt,
   - in einem zweiten Suchschritt wird ausgehend von dem Bewegungsvektor mit Pelgenauigkeit durch eine aliasing-reduzierende Interpolationsfilterung mittels eines digitalen Filters ein verbesserter Bewegungsvektor auf Subpelgenauigkeit ermittelt, wobei die Auflösung höher gewählt ist, als es der Auflösung des Bildpunktrasters im ersten Suchschritt entspricht und wobei zur Interpolation mehr Nachbarbildpunkte herangezogen werden als bei einer bilinearen Interpolation,
   - in einem dritten Suchschritt wird ausgehend von dem auf Subpelgenauigkeit bestimmten Bewegungsvektor durch eine weitere Interpolationsfilterung mittels des digitalen Filters ein weiter verbesserter Bewegungsvektor ermittelt, wobei die Auflösung gegenüber dem zweiten Suchschritt nochmals erhöht wird und die Interpolation basierend auf dem Bildpunktraster mit der Auflösung im zweiten Suchschritt vorgenommen wird, wobei die Interpolation mit der Auflösung von einem halben Bildpunkt bezüglich des aus dem zweiten Suchschritt gewonnenen Bildpunktrasters durchgeführt wird.

2. Verfahren nach Anspruch 1, **dadurch gekennzeichnet, daß** zur Interpolationsfilterung beim zweiten Suchschritt ein FIR-Filter verwendet wird mit den Filterkoeffizienten CO1 = 161/256, CO2 = -43/256, CO3 = 23/256, CO4 = -8/256.

3. Verfahren nach Anspruch 1 oder 2, **dadurch gekennzeichnet, daß** zur Interpolationsfilterung beim dritten Suchschritt ein FIR-Filter verwendet wird, mit den FIR-Filterkoeffizienten CO1' = 1/2, CO2' = 0, CO3' = O, CO4' = O.

4. verfahren nach einem der Ansprüche 1 bis 3, **dadurch gekennzeichnet, daß** für die Prädiktion von Video-Objekten (VO) die Filterkoeffizienten des digitalen Filters/FIR-Filters für jedes Video-Objekt getrennt aufbereitet werden und in einen Übertragungsbitstrom zu Beginn der Übertragung des jeweiligen Objektes eingefügt werden.

5. Verfahren nach einem der Ansprüche 1 bis 4, **dadurch gekennzeichnet, daß** zur Codierung eines Bewegungsvektors, insbesondere für eine Übertragung, der Wertebereich der zu codierenden Bewegungsvektor-Differenzen an eine erhöhte Auflösung angepaßt wird.

**Claims**

1. Method for generating an improved video signal during the motion estimation of picture sequences, in particular of a predicted signal for moving pictures with motion-compensating prediction, motion vectors being formed for picture blocks, the said motion vectors specifying, for each picture block of a current picture, the position of the picture block used for prediction relative to a chronologically preceding reference picture, having the following steps:

   - in a first search step, a motion vector is determined at pixel accuracy,
   - in a second search step, proceeding from the motion vector with pixel accuracy, by means of an aliasing-reducing interpolation filtering using a digital filter, an improved motion vector is determined at sub-pixel accuracy, the resolution being chosen to be higher than would correspond to the resolution of the pixel raster in the first search step, and, for the interpolation, more adjacent pixels being used than in the case of a bilinear interpolation,

- in a third search step, proceeding from the motion vector determined at sub-pixel accuracy, by means of a further interpolation filtering using the digital filter, a further improved motion vector is determined, the resolution again being increased relative to the second search step and the interpolation being performed on the basis of the pixel raster with the resolution in the second search step, the interpolation being carried out with the resolution of half a pixel with respect to the pixel raster obtained from the second search step.

2. Method according to Claim 1, **characterized in that**, for the interpolation filtering in the second search step, an FIR filter is used, with the filter coefficients CO1 = 161/256, CO2 = -43/256, CO3 = 23/256, CO4 = -8/256.

3. Method according to Claim 1 or 2, **characterized in that**, for the interpolation filtering in the third search step, an FIR filter is used, with the FIR filter coefficients CO1' = 1/2, CO2' = 0, CO3' = 0, CO4' = 0.

4. Method according to one of Claims 1 to 3, **characterized in that**, for the prediction of video objects (VO), the filter coefficients of the digital filter/FIR filter are conditioned separately for each video object and are inserted into a transmission bit stream at the beginning of the transmission of the respective object.

5. Method according to one of Claims 1 to 4, **characterized in that**, for the coding of a motion vector, in particular for a transmission, the range of values of the motion vector differences to be coded is matched to an increased resolution.

**Revendications**

1. Procédé pour former un meilleur signal d'image dans l'évaluation cinématique de séquences d'images, notamment d'un signal prévisionnel pour des images mobiles avec prévision à compensation de mouvement, en formant pour les blocs images, des vecteurs de mouvement qui indiquent pour chaque bloc image d'une image actuelle, la position du bloc image utilisée pour la prévision par rapport à une image de référence antérieure, comprenant les étapes suivantes :

- dans une première étape de recherche, on définit un vecteur de mouvement à la précision du pixel (pel),
- dans une seconde étape de recherche, partant du vecteur de mouvement à la précision du pel, par un filtrage par interpolation à pseudoréduction, à l'aide d'un filtre numérique, on détermine un vecteur de mouvement amélioré à une précision inférieure à celle de Pel, en choisissant une résolution plus élevée que celle de la trame des points images de la première étape de recherche et pour l'interpolation, on utilise plus de points images voisins que dans une interpolation bilinéaire,
- dans une troisième étape de recherche, partant du vecteur de mouvement défini à la précision inférieure à celle du pel, par un autre filtrage d'interpolation à l'aide du filtre numérique, on détermine un autre vecteur de mouvement amélioré en augmentant de nouveau la résolution par rapport à la seconde étape de recherche et en effectuant l'interpolation à partir de la trame des points images à la résolution correspondant à celle de la seconde étape de recherche, l'interpolation étant faite à la résolution d'un demi-point image par rapport à la trame des points images obtenus dans la seconde étape de recherche.

2. Procédé selon la revendication 1,
**caractérisé en ce qu'**
on utilise un filtre FIR avec des coefficients de filtre CO1 = 161/256, CO2 = -43/256, CO3 = 23/256, CO4 = -8/256, pour le filtrage par interpolation dans la seconde étape de recherche.

3. Procédé selon les revendications 1 ou 2,
**caractérisé en ce qu'**
on utilise un filtre FIR ayant les coefficients de filtre CO1' = 1/2, CO2' = O, CO3' = O, CO4' = O, pour le filtrage par interpolation dans la troisième étape de recherche.

4. Procédé selon l'une quelconque des revendications 1 à 3,
**caractérisé en ce que**
pour la prévision d'objets vidéo (VO), on traite les coefficients de filtre du filtre numérique/FIR pour chaque objet vidéo, de manière séparée et on les introduit dans le flux de bits de transmission au début de la transmission de chaque objet.

5.  Procédé selon l'une quelconque des revendications 1 à 4,
    **caractérisé en ce que**
    pour le codage d'un vecteur de mouvement notamment pour une transmission de la plage des valeurs des différences de vecteurs de mouvement à coder, on applique une résolution plus poussée.

A
a ⊕   b ◯   B +   Fig.1

c ◯   d ◯

C +           D +

| D-4 + | D-3 + | D-2 + | D-1 + | D+1 + | D+2 + | D+3 + | D+4 + |
|-------|-------|-------|-------|-------|-------|-------|-------|
| C-4 + | C-3 + | C-2 + | C-1 + | C+1 + | C+2 + | C+3 + | C+4 + |
| B-4 + | B-3 + | B-2 + | B-1 + | B+1 + | B+2 + | B+3 + | B+4 + |
| A-4 c-4+0 E-4 + | A-3 c-3+0 E-3 + | A-2 c-2+0 E-2 + | A-1 b0 c-1+0 d0 E-1 + | A+1 c+1+0 E+1 + | A+2 c+2+0 E+2 + | A+3 c+3+0 E+3 + | A+4 c+4+0 E+4 + |
| F-1 + | F-3 + | F-2 + | F-1 + | F+1 + | F+2 + | F+3 + | F+4 + |
| G-4 + | G-3 + | G-2 + | G-1 + | G+1 + | G+2 + | G+3 + | G+4 + |
| H-4 + | H-3 + | H-2 + | H-1 + | H+1 + | H+2 + | H+3 + | H+4 + |

Fig.2

Fig.3

Fig.4